(19) **Europäisches Patentamt / European Patent Office / Office européen des brevets**

(11) **EP 2 790 314 B1**

(12) # EUROPEAN PATENT SPECIFICATION

(45) Date of publication and mention
of the grant of the patent:
**08.08.2018 Bulletin 2018/32**

(51) Int Cl.:
***H02P 6/08*** (2016.01)

(21) Application number: **14164445.0**

(22) Date of filing: **11.04.2014**

(54) **Method for adjusting the efficiency of a synchronous machine**

Verfahren zur Anpassung der Effizienz einer Synchronmaschine

Procédé de réglage de l'efficacité d'une machine synchrone

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2013 IT MO20130093**

(43) Date of publication of application:
**15.10.2014 Bulletin 2014/42**

(73) Proprietor: **Irisman MH Equipment Corp.
Taipei (TW)**

(72) Inventor: **Gaetani, Angelo
62012 Civitanova Marche (MC) (IT)**

(74) Representative: **Crugnola, Pietro et al
Luppi Intellectual Property Srl
Viale Corassori, 54
41124 Modena (IT)**

(56) References cited:
**EP-A1- 0 702 451      EP-A1- 1 615 330
US-A1- 2002 110 007    US-A1- 2005 104 552
US-B1- 6 566 829**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a method for adjusting the efficiency of a synchronous machine, in particular of a wound rotor synchronous motor for an electric traction locomotion means.

Adjusting the efficiency of the synchronous machine can be advantageously combined with adjusting the torque or the speed of a synchronous machine according to the method disclosed in Italian patent IT 1329820 in the name of Angelo Gaetani.

In the field of electric traction locomotion means, it is known to use direct current machines with serial or parallel or separate excitation that enable the torque or the speed to be fully adjusted. Although these machines are eminently suitable for controlling the speed or torque of a drive, the aforesaid machines have significant problems linked to the dispensing power, which is limited because of the fact that the current on the brushes has to remain within certain limit values, dictated by safety conditions suitable for preventing sparking at the brushes taking up the current. Further, in these machines it is not possible to adjust the efficiency, inasmuch as it depends on the constructional features of the machine and on the operating conditions and consequently it is not possible to maintain the efficiency constant in different operating conditions, which adversely affects the energy consumption of the machine.

Alternatively to direct-current machines, so-called brushless motors can be used, which, through appropriate technical expedients, linked to the their realization and to the technique of vectorial control, have enabled a machine to be made that simulates a direct-current motor. In fact, the structure of this machine, known as a brushless machine, substantially consists of a synchronous machine (with an external armature and internal inductor), in a position transducer and in a matrix of static switches that supply the stator windings.

By controlling the stator windings appropriately, a perfect quadrature between the excitation and reaction fields may be obtained, also at the instant values, thus simulating the operation of the direct-current machine. Although this machine has great dynamism and control flexibility, it also has limitations. In fact, the particular structure of the motor, which is extremely fragile, limits the rotation speed to below a limit value beyond which the centrifugal forces produced during rotation could generate the detachment of the permanent magnets, with consequent breakage of the machine. Lastly, another problem arises from the fact that in such machines it is not possible to carry out any type of adjustment of the excitation flux. Further, also in this type of machine, it is not possible to adjust the efficiency, in particular to maintain it constant in varying operating conditions.

The use is also known for the drive of electric traction locomotion means of synchronous machines with a wound rotor in which the rotor windings are accessible from the exterior via brushes and slip-rings and the stator windings are accessible from the exterior via a terminal board.

These motors are used in particular for drives that require great power because they have great efficiency, great overload capacity and good performance in the field weakening region.

Also in this type of machine no efficiency adjusting system is known so as to maintain efficiency constant in varying operating conditions, to minimise the energy consumption of the machine.

EP 1 615 330 A1 discloses a method for adjusting the efficiency of a synchronous machine, in particular a synchronous motor comprising: calculating the efficiency of the synchronous machine in a preset operating condition; calculating the size of an angle Θott between a phase voltage (V) and an induced electromotive force (E) in the windings of the stator of the synchronous machine in said preset operating condition; calculating the size Ocar of the angle between the phase voltage and the induced electromotive force in an operating condition that is different from said preset condition; return the size of the value of the angle between the phase voltage and the induced electromotive force to the value Θott calculated in the preset operating condition, by varying the phase voltage and the operating frequency applied to the synchronous machine.

US 2005/104552 A1 discloses an apparatus for controlling a synchronous motor in such a way as to keep the operation of the motor stable even when sudden load variations occur. US 6 566 829 B1 discloses a method for adjusting the torque of a synchronous motor

One object of the present invention is to provide a method for adjusting the efficiency of a synchronous machine, in particular of a wound rotor synchronous motor, so as to maximise efficiency and maintain efficiency constant under varying operating conditions of the motor.

The object of the present invention is achieved with an adjusting method according to claim 1.

Owing to the invention, it is possible to preset a value of the efficiency of a synchronous machine and maintain this value constant as the operating conditions of the machine vary, thus optimising the power consumption of the machine in all the operating conditions. One manner of implementing the invention is disclosed below, merely by way of nonlimiting example, with reference to the attached drawings, in which:

Figure 1 is a vector diagram of the electrical parameters in each phase of the stator winding of a synchronous machine with a wound rotor;
Figure 2 is a diagram that illustrates the dependence of the synchronous reactance of the machine on the value of the magnetic induction.
Figure 3 illustrates how the vector diagram of Figure 1 is modified as the current in the stator windings varies.

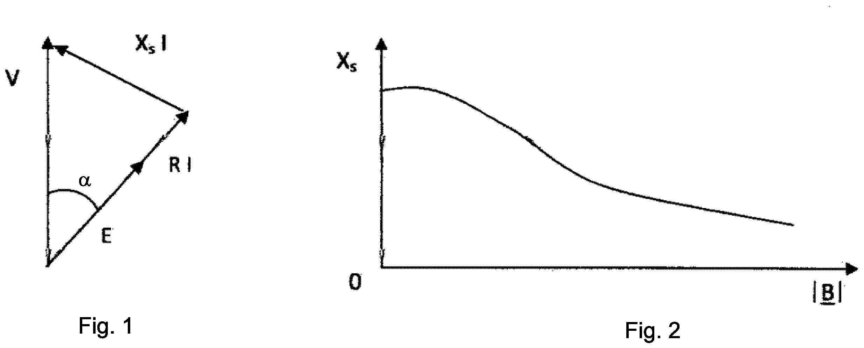

In Figure 1 there is illustrated the vector diagram of the electrical parameters in each phase of the stator winding.

From this vector diagram the following relation is obtained:

$$V=E + (R+jX_s)I \qquad (1)$$

in which V is the phase voltage, E the induced electromotive force, R the resistance of the phase winding, $X_s$ the synchronous reactance of the phase winding and I the phase current. (1) can also be written as V=E+$Z_s$I, in which $Z_s$=R+j$X_s$ is the synchronous impedance of the phase winding.

The efficiency of the synchronous machine is inversely proportional to the angle $\alpha$ between the phase voltage V and the induced electromotive force E, visible in the vector diagram of Figure 1. In other words, the efficiency of the machine increases with the decrease of the angle $\alpha$, and vice versa. The size of the angle $\alpha$ depends on the value of the synchronous impedance, i.e. on the value of the resistance R and of the synchronous reactance $X_s$, of the phase winding and on the value of the phase current I.

The value of the resistance R depends on the nature of the material of the winding and on the geometry thereof, whilst the value of the synchronous reactance $X_s$ depends on the magnetic induction B and thus on the excitation current, and decreases with the increase of magnetic induction B, i.e. of the excitation current.

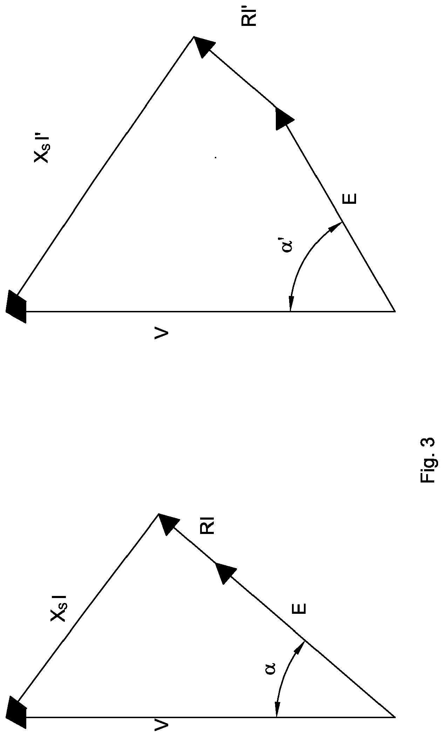

When the torque and/or of the number of revolutions of the motor are varied, i.e. when the power at which the motor operates is varied, if the supply voltage V is maintained constant, the phase current I varies, with a consequent variation of the angle $\alpha$ and, consequently, of the efficiency of the synchronous machine, as shown in Figure 3, in the event of an increase in power, i.e. an increase of the phase current to a value I'.

From Figure 3 it can be seen that an increase of the phase current increases the angle $\alpha$ with a consequent decrease of the efficiency of the motor.

According to the present invention, in order to maintain constant the efficiency of a synchronous machine, in particular of a synchronous motor, when the power is varied the supply voltage of the stator of the synchronous machine and/or the excitation current is varied, in such a manner that the angle $\alpha$ between the phase voltage V and the induced electromotive force E remains constant in each phase of the stator winding and the efficiency of the machine remains constant therewith.

In other words, the supply voltage and the excitation current are adjusted in such a manner that as the power absorbed by the synchronous machine varies, the vector triangle of Figure 1 always remains similar to itself, although the dimensions thereof vary.

This can be obtained by determining the size of the angle $\alpha$ in a preset operating condition, by measuring the supply voltage V, the phase current I in the stator windings, the resistance R of the windings and the synchronous reactance $X_s$, the latter being able to be determined by known methods, for example by load-free tests and short-circuit tests of the machine. The preset operating condition can be, for example, the condition in which the efficiency of the synchronous machine is at maximum. This operating condition can be determined experimentally, by calculating the efficiency of the machine in a plurality of different operating conditions.

After determining the value of the size of the angle $\alpha$ in said preset operating condition, it will be possible to adjust the supply voltage V and the excitation current as the operating conditions of the synchronous machine vary, so as to maintain the value of the size of the angle $\alpha$ and thus the efficiency of the machine constant and the same as that determined in said preset operating condition.

In order to obtain this result, as the operating conditions of the synchronous machine vary, the phase current I of the stator windings is measured, adjusting the value of the supply voltage V and of the excitation current in such a manner that the angle $\alpha$ between the supply voltage V and the induced electromotive force E remains constant.

As variation of the operation of the synchronous machine, for example when it operates as a motor, a variation of the resistant torque and/or of the rotation speed of the machine is meant, and consequently a variation of the power absorbed by the machine.

Owing to the invention it is thus possible to maintain the efficiency of the synchronous machine constant as operating conditions vary, making possible optimisation of efficiency with consequent optimisation of the energy consumption of the machine.

**Claims**

1.  Method for adjusting the efficiency of a synchronous machine, in particular of a synchronous motor, comprising:

    calculating the efficiency of the synchronous machine in a preset operating condition;
    calculating the size of an angle ($\alpha$) between a phase voltage (V) and an induced electromotive force (E) in the windings of the stator of the synchronous machine in said preset operating condition;
    calculating the size of the angle ($\alpha$') between said phase voltage (V) and said induced electromotive force in said operating condition that is different from said preset condition;
    **characterized in that** the method further comprises
    measuring a phase current (I) in the windings of the stator of the synchronous machine in said preset operating condition;

measuring a phase current (I') in said windings of the stator in an operating condition that is different from said preset condition;

adjusting the value of said phase voltage (V) and of an excitation current of the synchronous machine in such a manner as to return the value of the size of said angle to the value calculated in said preset operating condition.

2. Method according to claim 1, further comprising determining the synchronous reactance ($X_s$) of the synchronous machine in said preset operating condition.

3. Method according to claim 1, or 2, further comprising determining an operating condition of the synchronous machine in which the efficiency of the machine is maximum and assuming said operating condition as said preset operating condition.

**Patentansprüche**

1. Verfahren zum Einstellen des Wirkungsgrades einer Synchronmaschine, insbesondere eines Synchronmotors, mit den folgenden Schritten:

Berechnen des Wirkungsgrades der Synchronmaschine in einem vorgegebenen Betriebszustand;

Berechnen der Größe eines Winkels ($\alpha$) zwischen einer Phasenspannung (V) und einer induzierten elektromotorischen Kraft (E) in den Windungen des Stators der Synchronmaschine in dem vorbestimmten Betriebszustand;

Berechnen der Größe des Winkels ($\alpha$') zwischen der Phasenspannung (V) und der induzierten elektromotorischen Kraft in dem Betriebszustand, der von dem vorbestimmten Zustand abweicht;

**dadurch gekennzeichnet, dass** das Verfahren ferner Folgendes umfasst Messen eines Phasenstroms (I) in den Windungen des Stators der Synchronmaschine in dem vorbestimmten Betriebszustand;

Messen eines Phasenstroms (I') in den Windungen des Stators in einem Betriebszustand, der von dem vorbestimmten Zustand abweicht;

Einstellen des Wertes der Phasenspannung (V) und eines Anregungsstroms der Synchronmaschine auf eine solche Weise, dass der Wert der Größe des Winkels auf den in dem vorbestimmten Betriebszustand berechneten Wert zurückgeführt wird.

2. Verfahren nach Anspruch 1, das ferner das Bestimmen der Synchron-Reaktanz ($X_S$) der Synchronmaschine in dem vorbestimmten Betriebszustand umfasst.

3. Verfahren nach Anspruch 1 oder 2, das ferner das Bestimmen eines Betriebszustandes der Synchronmaschine umfasst, in dem der Wirkungsgrad der Maschine maximal ist und den Betriebszustand als den vorbestimmten Betriebszustand einnimmt.

**Revendications**

1. Procédé pour régler le rendement d'une machine synchrone, en particulier d'un moteur synchrone, comprenant:

calculer le rendement de la machine synchrone dans un état de fonctionnement préétabli;

calculer la dimension d'un angle ($\alpha$) entre une tension de phase (V) et une force électromotrice induite (E) dans les enroulements du stator de la machine synchrone dans ledit état de fonctionnement préétabli;

calculer la dimension de l'angle ($\alpha$') entre ladite tension de phase (V) et ladite force électromotrice induite dans ledit état de fonctionnement qui est différent dudit état préétabli;

**caractérisé en ce que** le procédé comprend en outre

mesurer un courant de phase (I) dans les enroulements du stator de la machine synchrone dans ledit état de fonctionnement préétabli;

mesurer un courant de phase (I') dans lesdits enroulements du stator dans un état de fonctionnement qui est différent dudit état préétabli;

régler la valeur de ladite tension de phase (V) et d'un courant d'excitation de la machine synchrone de telle manière à ramener la valeur de la dimension dudit angle à la valeur calculée dans ledit état de fonctionnement préétabli.

2. Procédé selon la revendication 1, comprenant en outre de déterminer la réactance synchrone ($X_S$) de la machine synchrone dans ledit état de fonctionnement préétabli.

3. Procédé selon la revendication 1 ou 2, comprenant en outre de déterminer un état de fonctionnement de la machine synchrone dans lequel le rendement de la machine est maximal et supposer ledit état de fonctionnement comme ledit état de fonctionnement préétabli.

Fig. 2

Fig. 1

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 1329820
- EP 1615330 A1
- US 2005104552 A1
- US 6566829 B1